# EUROPÄISCHE PATENTSCHRIFT

(11) **EP 4 119 908 B1**
(45) Veröffentlichungstag und Bekanntmachung des Hinweises auf die Patenterteilung: **12.02.2025**
(21) Anmeldenummer: 22183790.9
(22) Anmeldetag: 08.07.2022
(51) Int. Cl.: G01G 7/02

(54) **ELEKTROMAGNETISCH KOMPENSIERENDE BALKENWAAGE**
ELECTROMAGNETIC COMPENSATING BEAM SCALE
BALANCE À FLÉAU AVEC COMPENSATION ÉLECTROMAGNÉTIQUE

(30) Priorität: 13.07.2021 DE 102021118060
(43) Veröffentlichungstag der Anmeldung: 18.01.2023
(73) Patentinhaber: Technische Universität Ilmenau, Körperschaft des Öffentlichen Rechts, 98693 Ilmenau (DE)
(72) Erfinder: DARNIEDER, Maximilian, 98693 Ilmenau (DE); HILBRUNNER, Falko, Dr., 98693 Ilmenau (DE)
(74) Vertreter: Liedtke & Partner Patentanwälte

(56) Entgegenhaltungen:
- EP-A1- 2 610 596
- DE-A1- 102016 106 695
- DE-A1- 102022 101 797

## Beschreibung

Die vorliegende Erfindung betrifft eine elektromagnetisch kompensierende Balkenwaage, umfassend einen zweiarmigen, drehbar gelagerten Übersetzungshebel, dessen jeder Hebelarm mit einer ihm zugeordneten Lastaufnahme gekoppelt ist. Ein in einem geschlossenen Regelkreis integrierter Aktor kann an mindestens einer der beiden Lastaufnahmen oder unterhalb des Hebelgelenks angeordnet werden.

Die Messunsicherheit beim hochgenauen Massevergleich ist maßgeblich vom mechanischen System des Massekomparators abhängig. Dieses ist vielen Störeinflüssen ausgesetzt, deren Einfluss auf die Messunsicherheit maßgeblich durch den Mechanismus und dessen Justierung beeinflusst werden kann.

Es ist bekannt, dass gleicharmige Mechanismen, wie die Balkenwaage, durch ihren symmetrischen Aufbau viele Vorteile hinsichtlich Messunsicherheiten beim Massevergleich bieten. Dazu zählen:
- die Kompensation thermischer Dehnungen
- die Unabhängigkeit vom Umgebungsdruck
- symmetrisch angeordnete Wärmequellen
- eine geringere Empfindlichkeit gegenüber elektrischen und magnetischen Feldern
- ein geringerer Einfluss von vertikalen Bodenschwingungen durch die symmetrische Struktur
- eine beidseitige Positionsmessung
   und
- Substitutions- und Transpositionsmethode für Massevergleiche.

Waagen für hochgenaue Massevergleiche basieren heute fast ausschließlich auf dem Kompensationsprinzip (elektromagnetische Kraftkompensation kurz: EMK). Dafür werden häufig asymmetrische Mechanismen eingesetzt. Mit diesen Lösungen wird jedoch auf die genannten Vorteile symmetrischer Strukturen verzichtet.

Die in der Patentschrift DE 10 2016 106 695 B4 vorgestellte Lösung erweitert das Konzept der elektromagnetischen Kraftkompensation mit dem dazugehörigen Konzept des nachgiebigen Mechanismus auf eine symmetrische Struktur, wobei allerdings das dazugehörige Starrkörpermodell einen Freiheitsgrad F=0 aufweist, was nachteilig für die Umsetzung als nachgiebigen Mechanismus ist.

Der aus der DE 10 2016 106 695 B4 bekannte Mechanismus einer elektromagnetisch kraftkompensierenden Wägezelle erfüllt zwei Funktionen: (1.) Die Waagschale wird in der Regel von einer Parallelkurbel quasi-linear geführt (Führungsfunktion). Damit werden laterale Kräfte direkt in das Gestell abgeleitet. Dieser Teil des Mechanismus wird auch als Roberval Mechanismus bezeichnet. (2.) Ein Übersetzungshebel überträgt die von der Waagschale kommende Gewichtskraft zur gegenüberliegenden Seite des Hebels (Übersetzungsfunktion). Auch die Mechanismen der in DE 102016 106 695 B4 vorgeschlagenen elektromagnetisch kompensierende Balkenwaage erfüllen beide Funktionen, wobei sich jedoch die Funktionsintegration, d.h. ein Teil des Mechanismus erfüllt gleichermaßen die Führungs- und Übersetzungsfunktion, für einen nachgiebigen Mechanismus als nachteilig erweist, da die Gelenkorientierung nicht auf eine Funktion optimiert und somit für jede Funktion lediglich eine Kompromisslösung erzeugt werden kann. Die typischerweise verwendeten Festkörpergelenke mit Halbkreis-Kontur haben hinsichtlich der Belastung eine Vorzugsrichtung entlang ihrer Längsachse. Für laterale Belastungen sind sie weniger geeignet, da sie in dieser Richtung weniger steif sind. Bei der genannten Funktionsintegration treten allerdings beide Belastungen auf. Zudem ist eine flächenartige Umsetzung und eine monolithische Bauweise nicht vorgesehen.

Aufgabe der vorliegenden Erfindung ist es deshalb, die aufgezeigten Nachteile aus dem bekannten Stand der Technik zu überwinden und eine elektromagnetisch kompensierende Balkenwaage bereitzustellen, die einen optimierten nachgiebigen Mechanismus mit Festkörpergelenken als mechanische Basis umfasst, der vorzugsweise planar und monolithisch ausgeführt ist.

Erfindungsgemäß gelingt die Lösung dieser Aufgabe mit den Merkmalen des ersten Patentanspruchs. Vorteilhafte Ausgestaltungen der erfindungsgemäßen Lösung sind in den Unteransprüchen angegeben.

Eine erfindungsgemäße elektromagnetisch kompensierende Balkenwaage umfasst einen zweiarmigen, drehbar gelagerten Übersetzungshebel, dessen jeder Hebelarm mit einer ihm zugeordneten Lastaufnahme gekoppelt ist, und der mindestens einseitig einen in einem geschlossenen Regelkreis integrierten Aktor aufweist, wobei jede Lastaufnahme mittels eines Hebelmechanismus linear in vertikaler Richtung geführt wird oder ist. Erfindungsgemäß ist der Hebelmechanismus jeweils als Parallelkurbel aus einem gestellfest und über ein Koppelelement gelenkig verbundenen oberen Parallellenker, einem unteren Parallellenker und der dazugehörigen Lastaufnahme ausgeführt.

In einer Ausführungsform weist der Übersetzungshebel unterhalb seines Hebelgelenks einen horizontalen Aktor auf.

In einer Ausführungsform weist die elektromagnetisch kompensierende Balkenwaage ein Justiergewicht für den Übersetzungshebel auf, dessen Schwerpunkt in vertikaler Richtung zentrumsnah zum Hebelgelenk justierbar ist.

In einer Ausführungsform weist die elektromagnetisch kompensierende Balkenwaage jeweils ein Justiergewicht am oberen und / oder unteren Parallellenker auf.

In einer Ausführungsform sind zur Kompensierung der Drehsteifigkeit des Hebelmechanismus beide Arme des Übersetzungshebels über äußere Hebelgelenke mit dem jeweiligen Koppelelement vom Hebelgelenk vertikal beabstandet gekoppelt.

In einer Ausführungsform sind an die Lastaufnahmen starr montierte und / oder kardanisch aufgehängte Waagschalen mechanisch gekoppelt.

In einer Ausführungsform umfasst jeder der geschlossenen Regelkreise jeweils einen elektromagnetischen Aktor aus einem gestellfesten Magnetsystem und einer mitbewegten Spulenanordnung und zur Bestimmung der Auslenkung des Übersetzungshebels relativ zum Gestell einen Positionssensor aus einer gestellfesten Einheit und einer mitbewegten Einheit.

In einer Ausführungsform sind die beidseitigen Hebelmechanismen als monolithische, planare Gesamtstruktur ausgeführt.

In einer Ausführungsform sind die Parallelkurbeln anwendungsspezifisch an den Übersetzungshebel optimiert angekoppelt und / oder positioniert.

In einer Ausführungsform weisen die Parallelkurbeln jeweils zwei zueinander parallel angeordnete untere und obere Parallellenker auf.

Die erfindungsgemäße Lösung basiert auf der Trennung der Funktionen Führung und Übersetzung im Mechanismus (mechanischen Teil) der Balkenwaage, wodurch eine Umsetzung als nachgiebiger Mechanismus mit Festkörpergelenken ohne die oben genannten Nachteile realisierbar wird. Durch eine in den Mechanismus eingebrachte Nichtlinearität kann seine Steifigkeit minimiert und damit eine sehr hohe Sensitivität erreicht werden. Zudem kann der Mechanismus als planare (ebene) Gesamtstruktur gefertigt werden, wodurch vorteilhaft eine vereinfachte Herstellung und eine Flexibilität bei der Auswahl des Fertigungsverfahrens und somit auch des Werkstoffes möglich wird.

Die Erfindung wird im Folgenden anhand von Zeichnungen näher erläutert. Es zeigt:
- Figur 1-: den prinzipiellen Aufbau des nachgiebigen Mechanismus der erfindungsgemäßen elektromagnetisch kompensierende Balkenwaage
- Figur 2-: ein planares Ausführungsbeispiel des nachgiebigen Mechanismus
- Figur 3-: ein erstes, bauraumoptimiertes Ausführungsbeispiel des nachgiebigen Mechanismus
- Figur 4-: ein zweites, bauraumoptimiertes Ausführungsbeispiel des nachgiebigen Mechanismus
- Figur 5-: ein drittes Ausführungsbeispiel des nachgiebigen Mechanismus
- Figur 6-: ein viertes Ausführungsbeispiel des nachgiebigen Mechanismus
- Figur 7-: ein fünftes Ausführungsbeispiel des nachgiebigen Mechanismus und
- Figur 8-: ein sechstes Ausführungsbeispiel des nachgiebigen Mechanismus.

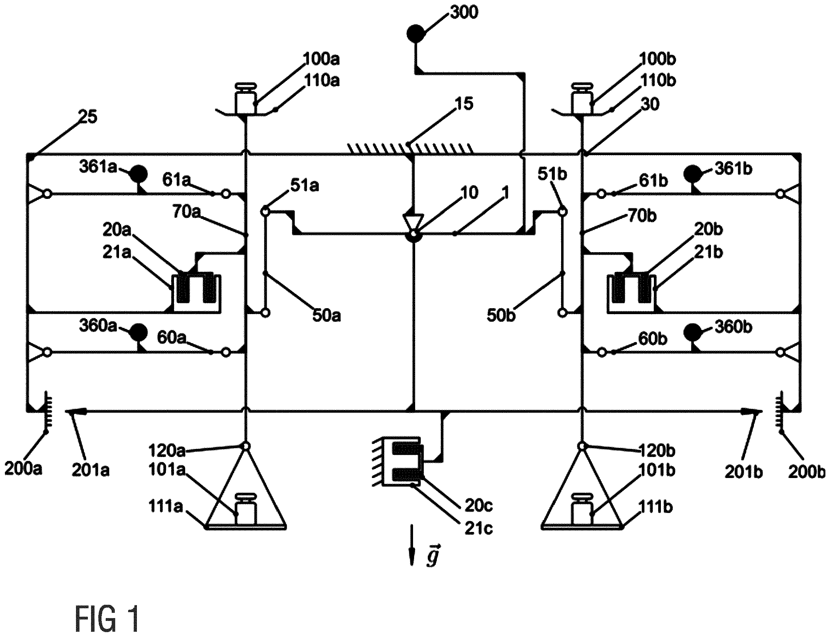

Mit der vorliegenden Erfindung wird eine elektromagnetisch kompensierende Balkenwaage vorgestellt, die in Figur 1 zunächst als Starrkörpermechanismus dargestellt ist. Der Schwerpunkt liegt dabei auf der Ausgestaltung des Mechanismus als nachgiebigen Mechanismus, der vorzugsweise monolithisch, also aus einem Halbzeug, hergestellt werden kann.

Die Balkenwaage kann Waagschalen aufweisen, die jeweils auf einer Seite des Übersetzungshebels (1) angeordnet sind. Es kann zwischen fest montierten Waagschalen (110a,b) und kardanisch aufgehängten, hängenden Waagschalen (111a,b) unterschieden werden. Aber auch jede Kombination der Ankopplung der Waagschalen ist denkbar. Die Waagschalen sind jeweils mechanisch an der sogenannten Lastaufnahme (70a,b) befestigt, welche gegenüber einem Gestell (15) mittels eines Hebelmechanismus geführt wird. Dieser Hebelmechanismus besteht aus vier Gelenken und vier Gliedern und wird in der Getriebetechnik als Parallelkurbel bezeichnet. Diese sind das Gestell (15), der untere Parallellenker (60a,b), der obere Parallellenker (61a,b) und die Lastaufnahme (70a,b), wobei die Parallellenker jeweils gestellfest und über ein Koppelelement (50a,b) gelenkig verbundenen sind. Mit Hilfe dieser Anordnung der Parallelkurbel kann nach dem Vorbild der Roberval-Tafelwaage eine quasi-lineare Führung der Waagschalen in vertikaler Richtung realisiert werden.

Der Kraftfluss, der von der Gewichtskraft der Gewichte (100a,b oder 101a,b) auf den Waagschalen (110a,b oder 111a,b) ausgeht, wird auf jeder Seite durch das Koppelelement (50a,b) auf den Übersetzungshebel (1) übertragen. Bei gleichen Hebellängen zum Hebelgelenk (10) sollten sich die Momente von Gewichten mit gleichen Massen exakt kompensieren. Weisen die Gewichte eine Massedifferenz auf, ist das statische Gleichgewicht gestört.

Nach dem Prinzip der elektromagnetischen Kraftkompensation wird in diesem Fall der Mechanismus durch eine oder mehrere Zusatzkräfte im Gleichgewicht gehalten, so dass die Auslenkung des Übersetzungshebels (1) minimal ist (idealerweise = 0). Die erwähnten Zusatzkräfte können beispielsweise durch einen elektromagnetischen Aktor erzeugt werden. Seine Hauptbestandteile sind ein gestellfestes Magnetsystem (21a,b,c) und eine mitbewegte Spule (20a,b,c). Fließt ein elektrischer Strom durch eine Spule eines dieser Magnetsysteme wird eine, dem Strom proportionale, Kraft erzeugt. Die Größe des erforderlichen Stromes bzw. der Zusatzkraft kann mit Hilfe eines geschlossenen Regelkreises definiert werden. Ein elementarer Bestandteil eines solchen Regelkreises ist ein Positionssensor (200a,b und 201a,b), mit dem die Auslenkung des Übersetzungshebels (1) relativ zum Gestell (15) ermittelt werden kann. Der Positionssensor (200a,b und 201a,b) besteht wiederum aus zwei Teilen, einer gestellfesten Einheit (200a,b) und einer mitbewegten Einheit (201a,b). Häufig wird dieser als optischer Sensor ausgeführt. Der Aktor bestehend aus 20c und 21c ist eine Option, die nur in Figur 1 dargestellt ist. Alle in den folgenden Figuren gezeigten Ausführungsbeispiele lassen sich aber ebenfalls mit dieser Aktorvariante ergänzen. Das gilt gleichermaßen für die nachfolgend beschriebenen Justiergewichte.

In einer bevorzugten Ausführungsform weist die Balkenwaage ein Hebel-Justiergewicht (300) auf. Dieses wird so am Hebelgelenk (10) positioniert, dass der Schwerpunkt des rotatorisch bewegten Übersetzungshebels (1) in vertikaler Richtung zentrumsnah zum Hebelgelenk (10) justierbar ist. Die horizontale Schwerpunktlage des Übersetzungshebels (1) sollte dabei möglichst unbeeinflusst bleiben. Durch die Verwendung und zusätzliche Feinjustierung dieses Justiergewichts (300) wird die Neigungsempfindlichkeit, also der Einfluss von Bodenneigungen auf die Messgröße, minimiert.

Einen vergleichbaren Effekt bewirken die Parallellenker-Justiergewichte (360a,b und 361a,b), die am unteren Parallellenker (60a,b) und/oder am oberen Parallellenker (61a,b) angebracht werden können. In Verbindung mit dem Hebel-Justiergewicht (300) kann durch systematisches Justieren damit ein Zustand erreicht werden, in dem die Neigungsempfindlichkeit minimal und die Sensitivität der Waage für Massedifferenzen maximal wird. Dies ist ohne diese Kombination nicht möglich.

Zur weiteren Erhöhung (Maximierung) der Sensitivität der Balkenwaage ist in einer bevorzugten Ausführungsform vorgesehen, den vertikalen Gelenkabstand zwischen dem Hebelgelenk (10) und den äußeren Hebelgelenken (51a,b) so zu gestalten, dass die initiale Drehsteifigkeit des nachgiebigen Mechanismus kompensiert wird.

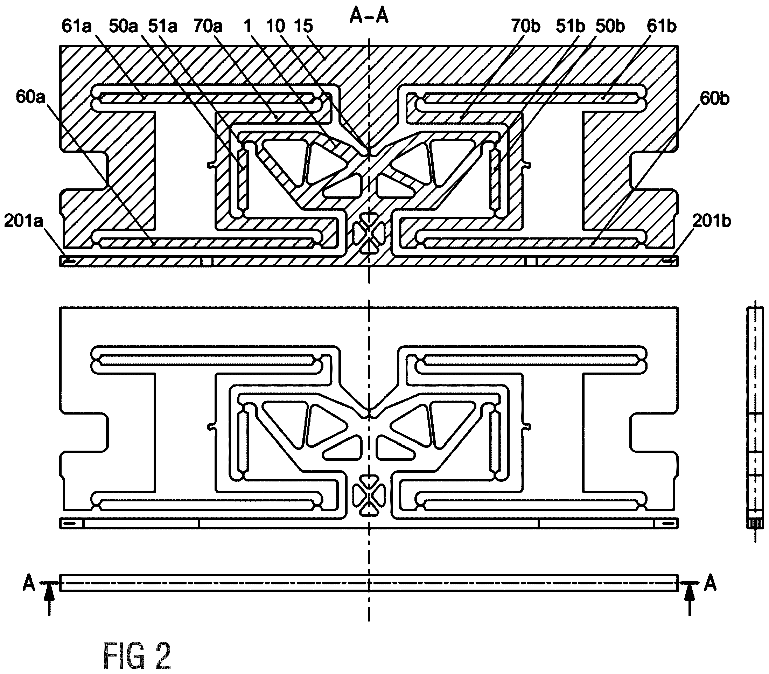

Die Realisierung des zuvor beschriebenen prinzipiellen Aufbaus einer elektromagnetisch kompensierenden Balkenwaage mit einem monolithischen nachgiebigen Hebelmechanismus ist in Figur 2 dargestellt. Es zeigt sich, dass dieser Hebelmechanismus sehr gut als planare Gesamtstruktur ausführbar ist. Dies hat mehrere Vorteile hinsichtlich seiner Fertigung, da alle wesentlichen Bearbeitungsschritte aus einer Richtung und in einer Aufspannung realisiert werden können. Dadurch kann die Positioniergenauigkeit der Bearbeitungsmaschine vollumfänglich ausgenutzt werden. Zudem ist wegen der einfachen Durchbrüche eine hohe Flexibilität bei der Wahl des Fertigungsverfahrens und ggf. des Werkstoffes gegeben.

Im Gegensatz zu dem aus der DE 10 2016 106 695 B4 bekannten nachgiebigen Hebelmechanismus kann mit dem vorgestellten Hebelmechanismus eine Trennung der Funktionen Führung und Übersetzung realisiert werden. Wie aus Figur 2 ersichtlich, sind die Festkörpergelenke für die Kraftübertragung vertikal angeordnet und durch eine Zugkraft belastet. Die Gelenke, die als Teil der Parallelkurbeln die Führungsfunktion erfüllen und durch horizontale Kräfte belastet werden, sind horizontal ausgerichtet. Somit können die genannten Teilfunktionen mit einer optimierten Gestaltung des Hebelmechanismus umgesetzt werden.

Ein weiterer Vorteil der erfindungsgemäßen Lösung liegt in dem damit realisierbaren Freiheitsgrad F (vgl. VDI 2127). Dieser sollte bei F = 1 liegen, um ein zwangläufiges Getriebe zu erhalten. Ist F < 1, ist ein ideales Getriebe unbeweglich. Dies gilt für die aus der DE 10 2016 106 695 B4 bekannten Getriebe. Für das in Figur 1 dargestellte Getriebe ergibt sich F = -1 (2x überbestimmt) und für das Getriebe nach Figur 2 ist F = 0 (1x überbestimmt). Nach der Theorie sind diese Getriebe also unbeweglich. Durch genaue Herstellung und / oder elastische Bauweise kann ihre Beweglichkeit jedoch sichergestellt werden. Allerdings wird die, durch nicht zu vermeidenden Fertigungsabweichungen bedingte Bewegungsfähigkeit durch eine zusätzliche elastische Verformung wiederhergestellt, wodurch mit einer Zunahme der Steifigkeit zu rechnen ist, die hier als nachteilig angesehen wird.

Für das in Figur 2 dargestellte Ausführungsbeispiel des planaren nachgiebigen Mechanismus ist nur eine einzige Gestellanbindung (15) im oberen Bereich der Struktur, dort wo der Hauptkraftfluss über das Hebelgelenk (10) in das Gestell abgeleitet wird, vorgesehen. Ebenso kann über eine zusätzliche Ständerstruktur (nicht dargestellt) der gesamte Mechanismus aufgehängt werden. Zur Minimierung der Steifigkeit für die Nennlast der Balkenwaage sind die äußeren (seitlichen) Gelenke am Hebel (51a,b) vorzugsweise in einem definierten vertikalen Abstand zum Hebelgelenk (10) angeordnet. Weiterhin können die Lastaufnahmen (70a,b) durch Verbinden mit weiteren Strukturelementen (nicht dargestellt) versteift und die Topologie des Übersetzungshebels (1) auf eine hohe Steifigkeit bei minimaler Masse optimiert werden. Schließlich können die mitbewegten Teile der symmetrisch angeordneten Positionssensoren (201a,b) mit einem großen horizontalen Abstand zum Drehzentrum angeordnet werden, was zur weiteren Erhöhung der Sensitivität der Waage beiträgt.

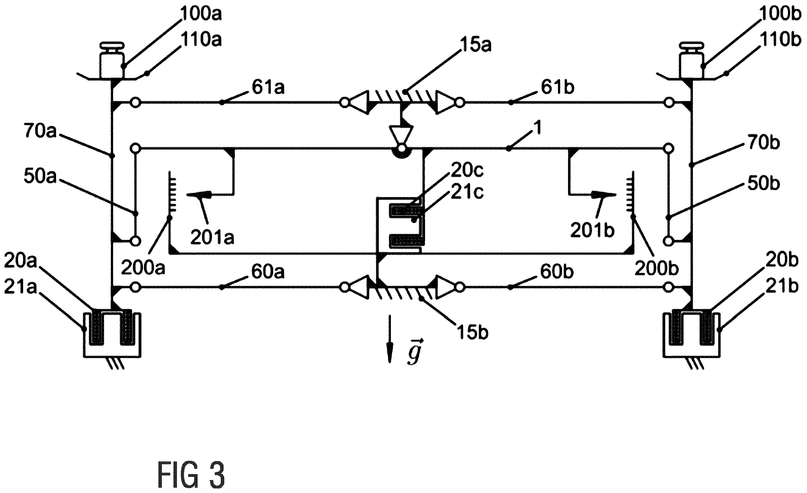

In Figur 3 ist ein weiteres, bauraumoptimiertes Ausführungsbeispiel des nachgiebigen Mechanismus offenbart. Dabei ist jedoch nachteilig, das eine zusätzliche Verbindung (15a,b) mit dem Gestell erforderlich wird. Diese kann entweder monolithisch durch eine Struktur außerhalb der Ebene erfolgen oder durch zwei Koppelstellen zum Gestell. Letztere Ausführungsform hat den Nachteil, dass Positionierfehler zwischen den Gestellteilen auftreten können. Die monolithische Variante erhöht die Komplexität der Geometrie und somit auch den Schwierigkeitsgrad der Fertigung eines derartigen Mechanismus.

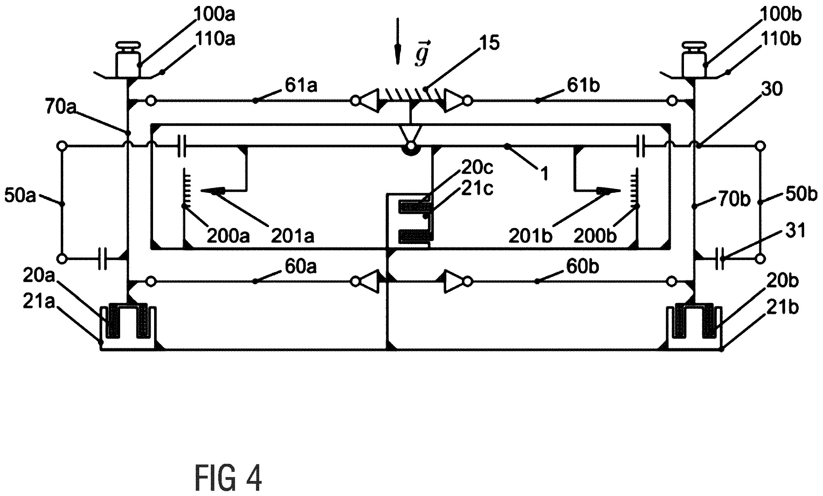

Die Nachteile der in Figur 3 gezeigten Ausführungsform für den nachgiebigen Hebelmechanismus (erschwerte Gestellanbindung) können mit einer in Figur 4 gezeigten Ausführungsform umgangen werden. Hier wird mit jeweils zwei lösbaren mechanischen Koppelstellen (31) das Koppelelement (50a,b) separat angebunden. Dabei sind natürlich die dem Fachmann bekannten Probleme von mechanischen Koppelstellen zu beachten, jedoch eröffnet die lösbare Verbindung des Koppelelements (50a,b) auch die Möglichkeit der Einstellung des vertikalen Abstands zwischen den Gelenk (10) und den äußeren Hebelgelenken (51a,b) (Steifigkeitskompensation).

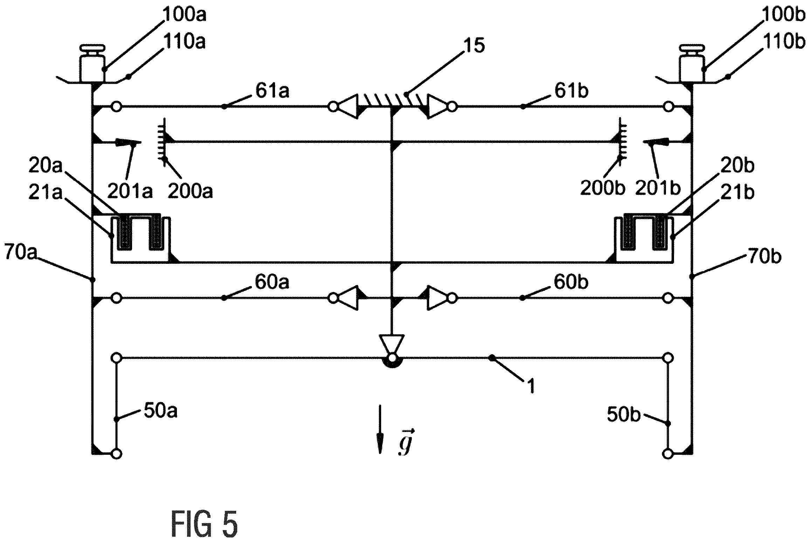

Figur 5 zeigt ein weiteres Ausführungsbeispiel, bei dem eine planare Gestellanbindung aller Komponenten realisierbar ist. Dies wird durch eine Verlagerung des Übersetzungshebels (1) unterhalb der gesamten Hebelstruktur erreicht.

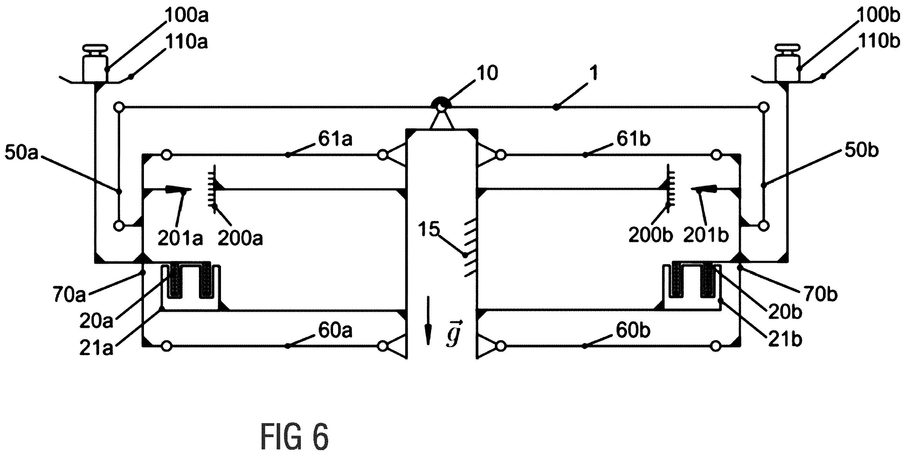

Es liegt aber auch im Bereich der Erfindung, den Übersetzungshebel (1) oberhalb der Gesamtstruktur anzuordnen (Figur 6). Damit kann ebenfalls eine vorteilhafte Gestellanbindung erreicht werden. Allerdings ist bei einer planaren Realisierung ein stehendes Hebelgelenk (10) erforderlich. Dieses wird auf Druck beansprucht, was zu einer negativen Auswirkung auf seine Funktion führen könnte.

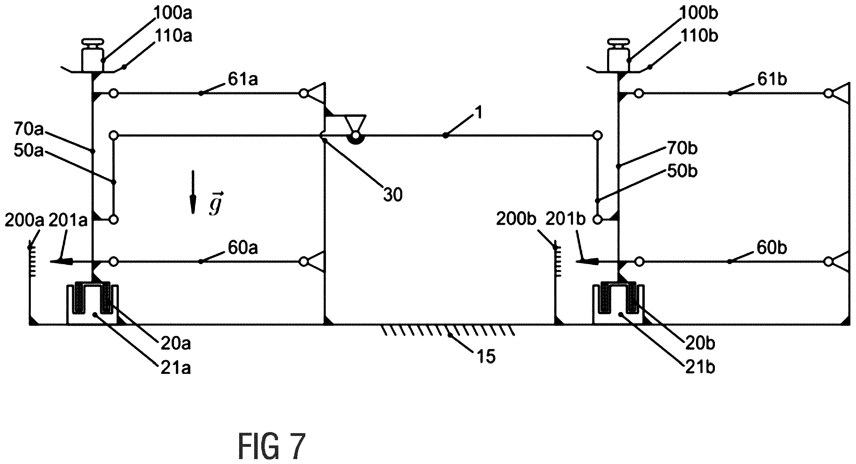

Bei dem in Figur 7 dargestellten Ausführungsbeispiel des nachgiebigen Mechanismus wurde die Anordnung der Parallelkurbeln (60a,b und 61a,b) variiert. Hierdurch kommt es durch die symmetrische Verformung des Übersetzungshebels (1) und die Dehnung der Koppelelemente (50a,b) nicht zu einer Erhöhung der Neigungsempfindlichkeit, da sich die Reaktionskräfte auf Seite a mit denen auf Seite b kompensieren.

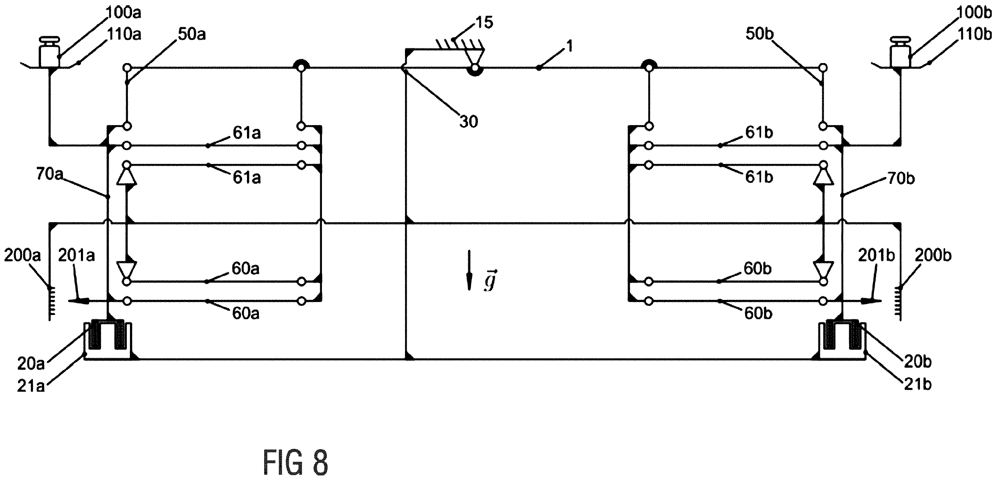

Bei dem in Figur 8 offenbarten Ausführungsbeispiel können die Linearführungseigenschaften mit Hilfe einer sogenannten Doppel-Parallelkurbel verbessert werden. Im Starrkörpermodell ergibt sich eine perfekte lineare Bewegung der Lastaufnahme und der mit ihr fest verbundenen Komponenten (Spule (20a,b), Positionssensor (201a,b) und Waagschale (110a,b).

Die vorgestellten Ausführungsbeispiele für einen planaren, nachgiebigen Hebelmechanismus schließen keinesfalls seine Ausgestaltung in der dritten Raumrichtung aus. Dabei können beispielsweise die Parallelkurbeln der quasi-linearen Führung symmetrisch außerhalb der Mittelebene des Hebelmechanismus liegen.

Zudem muss das Koppelband nicht zwingend über zwei Gelenke an die übrigen Glieder angebunden sein. Es genügt, hierfür ein biegeschlaffes Element mit verteilter Nachgiebigkeit einzubringen.

Ebenso schließt die Darstellung als oberschaliges Wägesystem eine gleichzeitige bzw. ausschließliche Nutzung als unterschaliges Wägesystem nicht aus.

Schließlich kann auch die Lage, Anzahl und Beschaltung der Komponenten der elektromagnetisch kompensierenden Balkenwaage analog zu den in der DE 10 2016 106 695 B4 beschriebenen Ausführungsformen variiert werden.

Die beiden Parallelkurbeln und/oder die beiden Parallellenker (60a,b, 61a,b) können in den oben dargestellten Ausführungsbeispielen separat und unabhängig voneinander beweglich sein.

### Bezugszeichenliste

- 1: - Übersetzungshebel
- 10: - Hebelgelenk
- 15: - Gestell
- 20a, b, c: - Spule (mitbewegt)
- 21a, b, c: - Magnetsystem (gestellfest)
- 25: - starre Verbindung
- 30: - keine mechanische Verbindung kreuzender Linien
- 31: - lösbare mechanische Koppelstellen
- 50a, b: - Koppelelement
- 51a, b: - äußere Hebelgelenke (ggf. mit vertikalem Abstand zum Hebelgelenk)
- 60a, b: - unterer Parallellenker
- 61a, b: - oberer Parallellenker
- 70a, b: - Lastaufnahme
- 100a, b: - Gewichtsstücke
- 101a, b: - Testgewichte
- 110a, b: - Waagschale (z.B. Substitutionswaagschale)
- 111a, b: - hängende Waagschale
- 120a, b: - kardanische Aufhängung
- 200a, b: - gestellfeste Einheit des Positionssensors
- 201a, b: - mitbewegte Einheit des Positionssensors
- 300: - Justiergewicht für Übersetzungshebel
- 360a, b: - Justiergewicht für unteren Parallellenker
- 361a, b: - Justiergewicht für oberen Parallellenker

## Patentansprüche

1. Elektromagnetisch kompensierende Balkenwaage, umfassend einen zweiarmigen, drehbar gelagerten Übersetzungshebel (1), dessen jeder Hebelarm mit einer ihm zugeordneten Lastaufnahme (70a,b) gekoppelt ist, und der mindestens einseitig einen in einem geschlossenen Regelkreis integrierten Aktor (20a,b; 21a,b) aufweist, wobei jede Lastaufnahme (70a,b) mittels eines Hebelmechanismus linear in vertikaler Richtung geführt wird oder ist, **dadurch gekennzeichnet, dass** der Hebelmechanismus jeweils als Parallelkurbel aus einem gestellfest und über ein Koppelelement (50a,b) gelenkig verbundenen oberen Parallellenker (61a), einem unteren Parallellenker (60a), der Lastaufnahme (70a) und einem oberen Parallellenker (61b), einem unteren Parallellenker (60b) und der Lastaufnahme (70b) ausgeführt ist.

2. Elektromagnetisch kompensierende Balkenwaage nach Anspruch 1, **dadurch gekennzeichnet, dass** der Übersetzungshebel (1) unterhalb eines Hebelgelenks (10) einen horizontalen Aktor (20c, 21c) aufweist.

3. Elektromagnetisch kompensierende Balkenwaage nach einem der Ansprüche 1 oder 2, **dadurch gekennzeichnet, dass** sie ein Justiergewicht (300) für den Übersetzungshebel (1) aufweist, dessen Schwerpunkt in vertikaler Richtung zentrumsnah zu einem Hebelgelenk (10) justierbar ist.

4. Elektromagnetisch kompensierende Balkenwaage nach einem der Ansprüche 1 bis 3, **dadurch gekennzeichnet, dass** sie jeweils ein Justiergewicht (360a,b und 361a,b) am oberen und / oder unteren Parallellenker (60a,b und 61a,b) aufweist.

5. Elektromagnetisch kompensierende Balkenwaage nach einem der Ansprüche 1 bis 4, **dadurch gekennzeichnet, dass** zur Kompensierung der Drehsteifigkeit des Hebelmechanismus beide Arme des Übersetzungshebels (1) über äußere Hebelgelenke (51a,b) mit dem jeweiligen Koppelelement (50a,b) von einem Hebelgelenk (10) vertikal beabstandet gekoppelt sind.

6. Elektromagnetisch kompensierende Balkenwaage nach einem der Ansprüche 1 bis 5, **dadurch gekennzeichnet, dass** an die Lastaufnahmen (70a,b) starr montierte (110a,b) und / oder kardanisch aufgehängte Waagschalen (111a,b) mechanisch gekoppelt sind.

7. Elektromagnetisch kompensierende Balkenwaage nach einem der vorhergehenden Ansprüche, **dadurch gekennzeichnet, dass** jeder der geschlossenen Regelkreise jeweils einen elektromagnetischen Aktor aus einem gestellfesten Magnetsystem (21a,b,c) und einer mitbewegten Spulenanordnung (20a,b,c) und zur Bestimmung der Auslenkung des Übersetzungshebels (1) relativ zum Gestell (15) einen Positionssensor aus einer gestellfesten Einheit (200a,b,c) und einer mitbewegten Einheit (201a,b,c) umfasst.

8. Elektromagnetisch kompensierende Balkenwaage nach einem der vorhergehenden Ansprüche, **dadurch gekennzeichnet, dass** die beidseitigen Hebelmechanismen als monolithische, planare Gesamtstruktur ausgeführt sind.

9. Elektromagnetisch kompensierende Balkenwaage nach einem der vorhergehenden Ansprüche, **dadurch gekennzeichnet, dass** die Parallelkurbeln anwendungsspezifisch an den Übersetzungshebel (1) optimiert angekoppelt und / oder positioniert sind.

10. Elektromagnetisch kompensierende Balkenwaage nach Anspruch 8, **dadurch gekennzeichnet, dass** die Parallelkurbeln jeweils zwei zueinander parallel angeordnete untere und obere Parallellenker aufweisen.

11. Elektromagnetisch kompensierende Balkenwaage nach einem der Ansprüche 7 bis 10, **dadurch gekennzeichnet, dass** der Positionssensor als ein optischer Sensor ausgeführt ist.

12. Elektromagnetisch kompensierende Balkenwaage nach einem der Ansprüche 5 bis 11, **dadurch gekennzeichnet, dass** der vertikale Abstand zwischen dem Hebelgelenk (10) und den äußeren Hebelgelenken (51a,b) so gestaltet ist, dass eine initiale Drehsteifigkeit des Hebelmechanismus kompensiert wird.

13. Elektromagnetisch kompensierende Balkenwaage nach einem der Ansprüche 2 bis 12, **dadurch gekennzeichnet, dass** das Hebelgelenk (10) und/oder die äußeren Hebelgelenke (51a,b) als Festkörpergelenke ausgebildet sind.

## Claims

1. Electromagnetically compensating beam scale, comprising a two-armed, rotatably mounted transmission lever (1), each lever arm of which is coupled to an associated load receiver (70a,b) and which has, at least on one side, an actuator (20a,b; 21a,b) integrated in a closed control loop, wherein each load receiver (70a,b) will be or is guided linearly in the vertical direction by means of a lever mechanism, **characterized in that** the lever mechanism is in each case embodied as a parallel crank comprising an upper parallel link (61a) fixed to the frame and connected in an articulated manner via a coupling element (50a,b), a lower parallel link (60a), the load receiver (70a) and an upper parallel link (61b), a lower parallel link (60b) and the load receiver (70a).

2. Electromagnetically compensating beam scale according to Claim 1, **characterized in that** the transmission lever (1) has a horizontal actuator (20c, 21c) below a lever joint (10).

3. Electromagnetically compensating beam scale according to either of Claims 1 and 2, **characterized in that** it has an adjusting weight (300) for the transmission lever (1), the centre of gravity of which transmission lever can be adjusted close to a centre of a lever joint (10) in the vertical direction.

4. Electromagnetically compensating beam scale according to any of Claims 1 to 3, **characterized in that** it has an adjusting weight (360a,b and 361a,b) on both the upper and/or lower parallel link (60a,b and 61a,b).

5. Electromagnetically compensating beam scale according to any of Claims 1 to 4, **characterized in that**, in order to compensate for the rotational stiffness of the lever mechanism, both arms of the transmission lever (1) are coupled by means of outer lever joints (51a,b) to the respective coupling element (50a,b) in a manner vertically spaced apart from a lever joint (10).

6. Electromagnetically compensating beam scale according to any of Claims 1 to 5, **characterized in that** scale pans (110a,b) rigidly mounted to the load receivers (70a,b) and/or cardanically suspended scale pans (111a,b) are mechanically coupled.

7. Electromagnetically compensating beam scale according to any of the preceding claims, **characterized in that** each of the closed control loops has a respective electromagnetic actuator made up of a magnet system (21a,b,c) fixed to the frame and a coil arrangement (20a,b,c) which moves with it, and, in order to determine the deflection of the transmission lever (1) relative to the frame (15), comprises a position sensor made up of a unit (200a,b,c) fixed to the frame and a unit (201a,b,c) which moves with it.

8. Electromagnetically compensating beam scale according to any of the preceding claims, **characterized in that** the double-sided lever mechanisms are designed as a monolithic, planar overall structure.

9. Electromagnetically compensating beam scale according to any of the preceding claims, **characterized in that** the parallel cranks are coupled to and/or positioned on the transmission lever (1) in an optimized manner specific to the application.

10. Electromagnetically compensating beam scale according to Claim 8, **characterized in that** the parallel cranks each have two lower and upper parallel links arranged parallel in relation to each other.

11. Electromagnetically compensating beam scale according to any of Claims 7 to 10, **characterized in that** the position sensor is designed as an optical sensor.

12. Electromagnetically compensating beam scale according to any of Claims 5 to 11, **characterized in that** the vertical distance between the lever joint (10) and the outer lever joints (51a,b) is configured such that an initial rotational stiffness of the lever mechanism is compensated for.

13. Electromagnetically compensating beam scale according to any of Claims 2 to 12, **characterized in that** the lever joint (10) and/or the outer lever joints (51a,b) are in the form of solid body joints.

## Revendications

1. Balance à fléau avec compensation électromagnétique, comprenant un levier de transmission (1) à deux bras, monté en rotation, dont chaque bras de levier est couplé à un support de charge (70a,b) qui lui est associé, et qui présente au moins sur un côté un actionneur (20a,b ; 21a,b) intégré dans une boucle d'asservissement fermée, dans laquelle chaque support de charge (70a,b) sera ou est guidé de manière linéaire dans la direction verticale au moyen d'un mécanisme de levier,
**caractérisée en ce que** le mécanisme de levier est réalisé respectivement sous la forme d'une manivelle parallèle composée d'une bielle parallèle supérieure (61a) reliée de manière solidaire du bâti et de manière articulée par l'intermédiaire d'un élément de couplage (50a,b), d'une bielle parallèle inférieure (60a), du support de charge (70a) et d'une bielle parallèle supérieure (61b), d'une bielle parallèle inférieure (60b) et du support de charge (70b).

2. Balance à fléau avec compensation électromagnétique selon la revendication 1, **caractérisée en ce que** le levier de transmission (1) présente un actionneur horizontal (20c, 21c) au-dessous d'une articulation de levier (10).

3. Balance à fléau avec compensation électromagnétique selon l'une quelconque des revendications 1 ou 2, **caractérisée en ce qu'**elle présente un poids d'ajustage (300) pour le levier de transmission (1) dont le centre de gravité peut être ajusté dans la direction verticale proche du centre d'une articulation de levier (10).

4. Balance à fléau avec compensation électromagnétique selon l'une quelconque des revendications 1 à 3, **caractérisée en ce qu'**elle présente respectivement un poids d'ajustage (360a,b et 361a,b) sur la bielle parallèle supérieure et/ou inférieure (60a,b et 61a,b).

5. Balance à fléau avec compensation électromagnétique selon l'une quelconque des revendications 1 à 4, **caractérisée en ce que** pour compenser la rigidité à la torsion du mécanisme de lever, les deux bras du levier de transmission (1) sont couplés par l'intermédiaire d'articulations de levier extérieures (51a,b) à l'élément de couplage respectif (50a,b) à distance verticale d'une articulation de levier (10).

6. Balance à fléau avec compensation électromagnétique selon l'une quelconque des revendications 1 à 5, **caractérisée en ce que** des plateaux (111a,b) montés rigidement (110a,b) et/ou suspendus à la Cardan aux supports de charge (70a,b) sont couplés mécaniquement.

7. Balance à fléau avec compensation électromagnétique selon l'une quelconque des revendications précédentes, **caractérisée en ce que** chacune des boucles d'asservissement fermées comprend respectivement un actionneur électromagnétique composé d'un système magnétique (21a,b,) solidaire du bâti et d'un agencement de bobine associé (20a,b,c), et pour déterminer l'excursion du levier de transmission (1) par rapport au bâti (15), un capteur de position composé d'une unité (200a,b,c) solidaire du bâti et d'une unité associée (201a,b,c).

8. Balance à fléau avec compensation électromagnétique selon l'une quelconque des revendications précédentes, **caractérisée en ce que** les mécanismes de levier bilatéraux sont réalisés sous la forme d'une structure globale plane, monolithique.

9. Balance à fléau avec compensation électromagnétique selon l'une quelconque des revendications précédentes, **caractérisée en ce que** les manivelles parallèles sont couplées et/ou positionnées de manière optimisée au niveau du levier de transmission (1) selon chaque application spécifique.

10. Balance à fléau avec compensation électromagnétique selon la revendication 8, **caractérisée en ce que** les manivelles parallèles présentent respectivement deux bielles parallèles inférieure et supérieure disposées en parallèle l'une à l'autre.

11. Balance à fléau avec compensation électromagnétique selon l'une quelconque des revendications 7 à 10, **caractérisée en ce que** le capteur de position est réalisé sous la forme d'un capteur optique.

12. Balance à fléau avec compensation électromagnétique selon l'une quelconque des revendications 5 à 11, **caractérisée en ce que** l'espacement vertical entre l'articulation de levier (10) et les articulations de levier extérieures (51a,b) est configuré de façon à compenser une rigidité à la torsion initiale du mécanisme de levier.

13. Balance à fléau avec compensation électromagnétique selon l'une quelconque des revendications 2 à 12, **caractérisée en ce que** l'articulation de levier (10) et/ou les articulations de levier extérieures (51a,b) sont réalisées sous la forme d'articulations à corps solide.
